# EUROPÄISCHE PATENTSCHRIFT

(11) **EP 2 168 006 B1**
(45) Veröffentlichungstag und Bekanntmachung des Hinweises auf die Patenterteilung: **12.09.2012**
(21) Anmeldenummer: 08775193.9
(22) Anmeldetag: 17.07.2008
(51) Int. Cl.: G03B 15/05, F21V 9/06

(54) **Beleuchtungsvorrichtung für die Blitzlichtfotografie**
Illumination device for flash photography
Dispositif d'éclairage pour photographie au flash

(30) Priorität: 18.07.2007 DE 102007033455
(43) Veröffentlichungstag der Anmeldung: 31.03.2010
(73) Patentinhaber: Bron Elektronik AG, 4123 Allschwil (CH)
(72) Erfinder: PORTMANN, François, F-68330 Huningue (FR); GRIESSMANN, Marcel, F-68700 Steinbach (FR)
(74) Vertreter: Popp, Eugen
(86) Internationale Anmeldenummer: PCT/EP2008/059414
(87) Internationale Veröffentlichungsnummer: WO 2009/010571

(56) Entgegenhaltungen:
- DE-A1-102005 034 436
- DE-B- 1 225 041
- GB-A- 726 926
- GB-A- 878 640

## Beschreibung

Die Erfindung betrifft eine Beleuchtungsvorrichtung für die Blitzlichtfotografie und Verwendungen dieser Beleuchtungsvorrichtung.

Herkömmliche Vorrichtungen, wie z.B. aus der DE 10 2005 034436A1, GB878640A, GB726926A oder DE 1225041B bekannt, zur Bereitstellung von Licht für die Blitzlichtfotografie sind insbesondere für Blitzserien mit großer Leistung vorgesehen. Bei der Blitzerzeugung wird ein großer Anteil der elektrischen Energie in Wärme umgewandelt, so dass bei wiederholtem Blitzen die Temperatur in der Beleuchtungsvorrichtung, insbesondere im Reflektorraum schnell ansteigt. Da der Reflektorraum üblicherweise im Gebrauch in Richtung eines aufzunehmenden Objektes mittels eines Schutzglases abgedeckt ist, kann diese Wärme nur schlecht abgeführt werden. Insofern ist bei herkömmlichen Blitzleuchten nur eine limitierte Anzahl von Blitzen erzeugbar. Das Schutzglas dient insbesondere als UV-Schutz, verhindert aber, dass zusätzliche Lichtquellen, wie z. B. das zur Vorbereitung der Bildaufnahme benötigte Einstelllicht, angewendet werden können.

Blitzlichtserien mit hoher Blitzdichte bzw. eine hohe Anzahl von Blitzen, die in einer Reihe produziert werden können und die Anwendung von Einstelllicht sind aber insbesondere im Mode-, Sport- und Event-Bereich für hohe Bildqualität wichtig.

Um nun diesen Nachteilen zu begegnen, wird anstelle des Schutzglases ein Gitter zur Abdeckung des Reflektorraums verwendet. Das Gitter ermöglicht es, dass Wärme aus dem Reflektorraum entweichen kann. Zudem ist bei Anordnungen dieser Art das erforderliche Einstelllicht einsetzbar. Allerdings ist es in diesem Falle schwierig, eine geeignete UV-Schutzmaßnahme an der Anordnung vorzusehen.

Es ist Aufgabe der Erfindung, eine Beleuchtungsvorrichtung für die Blitzlichtfotografie anzugeben, mittels derer eine für alle Anwendungsbereiche geeignete Anordnung vorgesehen ist, insbesondere soll es ermöglicht werden, beliebig lange Blitzserien zu erzeugen und dabei einen optimalen UV-Schutz an der Beleuchtungsvorrichtung vorzusehen.

Diese Aufgabe wird durch eine Beleuchtungsvorrichtung nach Anspruch 1 und durch entsprechende Verwendungen nach Anspruch 18 gelöst. Vorteilhafte Weiterbildungen sind in den Unteransprüchen angegeben.

Insbesondere wird die Aufgabe durch eine Beleuchtungsvorrichtung für die Blitzlichtfotografie gelöst, die mindestens einen im Gebrauch in Richtung eines aufzunehmenden Objektes anordenbaren Reflektorraum mit mindestens einem Reflektor und mindestens ein in dem Reflektorraum angeordnetes Blitzelement als erste Lichtquelle umfasst, sowie mindestens ein, den Reflektorraum im Gebrauch in Richtung des aufzunehmenden Objektes auf einer sich radial erstreckenden Außenfläche abdeckendes UV-Filterelement, wobei das Filterelement wenigstens eine Lüftungsöffnung aufweist bzw. derart ausgebildet ist, dass eine Lüftungsöffnung vorgesehen ist.

Ein wesentlicher Punkt der Erfindung liegt darin, dass mittels des Filterelements nun mindestens das aufzunehmende Objekt ausreichend vor UV-Strahlung geschützt ist und auch die während des Blitzens entstehende Wärme gleichzeitig durch die Lüftungsöffnung, insbesondere aus dem Reflektorraum, abführbar ist bzw. so die Lichtquellen kühlbar sind. Die Anzahl der produzierbaren Blitze in einer Blitzserie kann erhöht werden und das Objekt lässt sich näher an die Leuchte heranbringen als bei herkömmlichen Anordnungen.

In einer Ausführungsform ist der Retlektorraum ringförmig ausgebildet und das Blitzelement ist über den Umfang (des ringförmigen Reflektorraums) verteilt angeordnet. Das heißt, die Beleuchtungsvorrichtung ist vorzugsweise ringförmig ausgebildet und erlaubt dabei die über den Umfang verteilte Anordnung des Blitzelements. Damit kann auf einen definierten Raum konzentriert eine hohe Lichtausbeute genutzt werden. Die ringförmige Ausgestaltung erlaubt es, eine zentrierte Lichtquelle vorzusehen, die hierfür an fotografischem Gerät entsprechend montiert wird. Einzelheiten zur Anwendung ringförmiger Beleuchtungsvorrichtungen werden weiter unten näher beschrieben.

Ist die Leuchtenanordnung und damit auch der Reflektorraum ringförmig ausgebildet, so kann vorzugsweise auch das Blitzelement ringförmig ausgebildet sein. Das Blitzelement umfasst daher mindestens ein ringförmiges Blitzrohr, welches im ringförmigen Reflek-torraum entweder ortsfest oder variabel einstellbar montiert oder montierbar ist. Meist ist das Rohr fest im Reflektor eingebaut. Durch den Reflektor werden dann z. B. isoliert die zwei Leistungspole für die Zuführung der Blitzenergie geführt. Ein dritter Pol führt vorzugsweise die Zündspannung zum Zünddraht des Blitzrohres.

Vorzugsweise ist bzw. sind im Reflektorraum mindestens eine, insbesondere mindestens drei gleichmäßig über den Umfang verteilt angeordnete Punktlichtquelle(n) als zweite Lichtquelle vorgesehen, wobei die Punktlichtquelle(n) als Einstelllicht dient bzw. dienen. Das Einstelllicht als Dauerlichtquelle ist u. a. notwendig, um beispielsweise die Beleuchtungsvorrichtung und damit das Blitzelement richtig auszurichten. Mit der erfindungsgemäßen Vorrichtung ist es nun möglich, Einstelllicht anzuwenden. Das Einstelllicht ist hierzu vorzugsweise in unmittelbarer Nähe zu der Lüftungsöffnung angeordnet, so dass die Wärme einfach abführbar ist bzw. die Lichtquellen kühlbar sind. Insbesondere erlaubt die Öffnung eine hohe Einstelllicht-Leistung, weil keine Abdeckung des Einstelllichts vorgesehen ist. Das Einstelllicht wird also nicht durch das Filterelement beeinträchtigt, d. h. die Filterwirkung tritt bezüglich des Einstelllichts nicht ein. Damit ist das Einstelllicht uneingeschränkt anwendbar.

Vorzugsweise ist jede der Punktlichtquellen vor jeweils einer Lüftungsöffnung oder der Lüftungsöffnung angeordnet bzw. die Lüftungsöffnung(en) ist bzw. sind derart ausgebildet und angeordnet, dass sie sich vor den Einstelllicht-Punktlichtquellen befinden. Die Öffnung bzw. die Öffnungen ist bzw. sind so definiert, dass minimale Sicherheitsmaße eingehalten werden. Sicherheitsmaße sind Sicherheitsabstände, d. h. Maximalmaße, welche nicht unterschritten (ggf. auch nicht überschritten) werden dürfen, damit heiße oder elektrisch geladene Teile nicht berührt werden können. So ist z. B. ein zu beachtendes Sicherheitsmaß die höchstmögliche Breite der Lüftungsöffnung bzw. der Öffnungen.

Eine erfindungsgemäße Weiterbildung sieht vor, dass ein Lüfter, insbesondere Gebläse vorgesehen ist, mittels dem der Reflektorraum zwangslüftbar ist, wobei die durch den Lüfter in den Reflektorraum geblasene Luft durch die im Filterelement vorgesehene Lüftungsöffnung nach außen entweichen kann. Die Vorrichtung für die Zwangsbelüftung ist dabei vorzugsweise derart anzuordnen, dass die erwärmte Luft aus dem Reflektorraum durch die Lüftungsöffnung geschoben und so die Wärme aus der Anordnung abgeführt wird.

Vorzugsweise umfasst der Reflektorraum einen Hauptreflektor und einen Seitenreflektor, wobei der Seitenreflektor eine sich axial erstreckende äußere Seitenwand des Reflektorraumes begrenzt.

In einer Ausführungsform sind der Seitenreflektor und das Filterelement einstückig ausgebildet, wobei zweckmäßigerweise Hauptreflektor und Seitenreflektor dann voneinander getrennt vorgesehen sind. Alternativ ist es möglich, das Filterelement auch getrennt vom Seitenreflektor vorzusehen. Das heißt, beide Elemente können getrennt voneinander nach Bedarf eingesetzt werden. Mit der ringförmigen Anordnung ist das Filterelement bevorzugt ebenfalls ringförmig ausgebildet und deckt den Reflektorraum entsprechend teilweise ab.

Eine Ausführungsform sieht vor, dass das Filterelement als UV-Schutzglas ausgebildet ist. Das Schutzglas verhält sich optisch z. B. wie ein Diffusor für bestimmte Lichtwellenlängen. Kürzere Wellenlängen können so z. B. abgeblockt werden. Das Schutzglas hat vorzugsweise keinen Eintluss auf den Beleuchtungswinkel. Es schützt insbesondere das aufzunehmende Objekt vor UV-Strahlung.

Sind Seitenreflektor und Filterelement, also z. B. das Schutzglas, fest miteinander verbunden, wird das Schutzglas bevorzugterweise in einen z. B. entsprechend geformten Bereich des Seitenreflektors aufgenommen. Die Verbindung entsteht vorzugsweise durch Bördeln, so dass das Schutzglas fest in dem ver- bzw. geformten Bereich des Seitenreflektors sitzt. Das heißt, der Seitenreflektor wird im Verbindungsbereich (Verbindung mit dem Schutzglas) derart um das Schutzglas geformt, dass eine feste, bevorzugt nicht demontierbare Verbindung entsteht. Dies ist eine sehr ökonomische Verbindungsmethode und führt dazu, dass das Schutzglas mit dem Seitenreflektor eine auswechselbare, nicht demontierbare Baugruppe bildet.

In einer weiteren Ausführungsform ist dem Reflektorraum ein Elektronikraum zugeordnet, der zur Aufnahme einer Steuerschaltung für die Beleuchtungsvorrichtung dient. Der Elektronikraum ist z. B. unmittelbar benachbart (also zweckmäßigerweise z. B. "hinter") dem Reflektorraum angeordnet, um die Baugröße der Leuchtenanordnung klein zu halten. Mittels des Gebläses wird die Luft vorzugsweise vom Elektronikraum gezogen, in den Reflektorraum geschoben und zur Abfuhr der Wärme über die Lüftungsöffnung ins Freie geleitet.

Vorteilhafterweise ist die im Filterelement vorgesehene Lüftungsöffnung als durchgehender Öffnungsring ausgebildet, welcher vorzugsweise das Filterelement nach radial innen begrenzt. Die Öffnung ist also am Innenumfang des Rings angeordnet (bzw. ist derart angeordnet, dass ein Ring ausgebildet wird) und der Reflektorraum ist damit nur teilweise abgedeckt. Unmittelbar hinter dem Öffnungsring sind dann beispielsweise die Punktlichtquellen, also das Einstelllicht, angeordnet. Diese Anordnung lässt sich einfach herstellen. Zudem sind die einzelnen Bauteile, insbesondere das Filterelement derart ausgebildet, dass es leicht handhabbar ist (vor allem im Hinblick auf den einstückig angeformten oder auch trennbar angeordneten Seitenreflektor).

Alternativ oder auch zusätzlich ist es möglich, die im Filterelement vorgesehene Lüftungsöffnung durch eine Vielzahl vorzugsweise gleichmäßig über den Umfang verteilt angeordneter Einzelöffnungen zu definieren. Das Filterelement, also das UV-Schutzglas weist demnach einzelne Öffnungen auf, die die Lüftungsöffnung ausbilden. Die Eingriffsmöglichkeiten in den Reflektorraum sind so nahezu verhindert. Zudem ist die Konstruktion mechanisch stabiler.

In einer vorteilhaften Ausführungsform ist der Hauptreflektor durch die mit einer reflektierenden Schicht versehene Innenseite eines ringförmigen L-Profils gebildet. Das L-Profil kleidet damit die Wände des Reflektorraumes aus, insbesondere dessen sich axial erstreckende innere Seitenwand und dessen sich radial erstreckende Rückwand. Auch der Seitenreflektor ist mit der reflektierenden Schicht ausgebildet.

Der Seitenreflektor (für die sich axial erstreckende äußere Seitenwand) und das Filterelement für die der sich radial erstreckenden Rückwand gegenüberliegenden Fläche (sich radial erstreckende Außenfläche) umgeben den übrigen Bereich des Reflektorraumes. Möglich ist es auch, dass das Filterelement ein ringförmiges L-Profil aus UV-Schutzglas umfasst, welches derart am Hauptreflektor angeordnet ist, dass die Innenseiten von Hauptreflektor und Filterelement einander zugewandt sind. Das heißt, auch die sich axial erstreckende äußere Seitenwand ist durch das Schutzglas gebildet bzw. an dieser angeordnet, so dass sich das Filterelement letztendlich bis in den Bereich der Seitenwand erstreckt. Die aneinandergefügten L-Profile umschließen dann zusammen den Reflektorraum unter Ausbildung der oben beschriebenen Lüftungsöffnung.

Der Elektronikraum ist an der Rückseite des sich radial nach außen erstreckenden Schenkels des ringförmigen L-Profils des Hauptreflektors angeordnet, insbesondere innerhalb eines sich ringförmig erstreckenden Elektronikgehäuses. Damit ist die Elektronik sicher und geschützt unterbringbar, wobei durch die unmittelbare Anordnung des Elektronikraums am Reflektorraum eine Platz sparende Vorrichtung bereitgestellt wird.

Vorzugsweise ist bei Ausbildung des Filterelements als ringförmiges L-Profil aus UV-Schutzglas der sich axial oder alternativ auch radial erstreckende Schenkel durch ein(e) lichtundurchlässige(s) Band oder Ringscheibe abdeckbar. Dies ermöglicht eine zusätzliche Möglichkeit, einen sicheren UV-Schutz bereitzustellen.

Angegeben werden weiter Verwendungen einer Beleuchtungsvorrichtung für die Blitzlichtfotografie.

Vorzugsweise wird die beschriebene Vorrichtung für eine Kamera oder einen Reflektorschirm verwendet, wobei in erstgenanntem Fall die Beleuchtungs vorrichtung sich vorzugsweise um ein Objektiv und in zweitgenanntem Fall sich um einen Schirmstock herumerstreckend anordenbar ist.

Für die Anwendung mit dem Reflektorschirm ist es von Vorteil, den Seitenreflektor zu entfernen und den Schirmreflektor zu nutzen. Hierzu ist z. B. das L-förmige Filterelementprofil vorgesehen. Durch diese bevorzugten Verwendungen können verschiedene fotographische Instrumente mit der Beleuchtungsvorrichtung auf einfache Art mit besserer Ausleuchtung als bisher betrieben werden.

Nachfolgend wird die Erfindung anhand von Ausführungsbeispielen beschrieben, die anhand der Abbildungen näher erläutert werden. Hierbei zeigen:
- - Fig. 1: eine Ausführungsform der erfindungsgemäßen Beleuchtungsvorrichtung in einer vereinfachten Schnittdarstellung;
- - Fig. 2: eine weitere Ausführungsform der erfindungsgemäßen Vorrichtung in einer vereinfachten Schnittdarstellung;
- - Fig. 3: eine weitere Ausführungsform der erfindungsgemäßen Vorrichtung in einer Ansicht in Richtung auf den Reflektorraum;
- - Fig. 4: eine weitere Ausführungsform der erfindungsgemäßen Vorrichtung in einer aufgeschnittenen Darstellung;
- - Fig. 5: eine Darstellung zum Stand der Technik;
- - Fig. 6: eine weitere Darstellung zum Stand der Technik.

In der nachfolgenden Beschreibung werden für gleiche und gleich wirkende Teile dieselben Bezugsziffern verwendet.

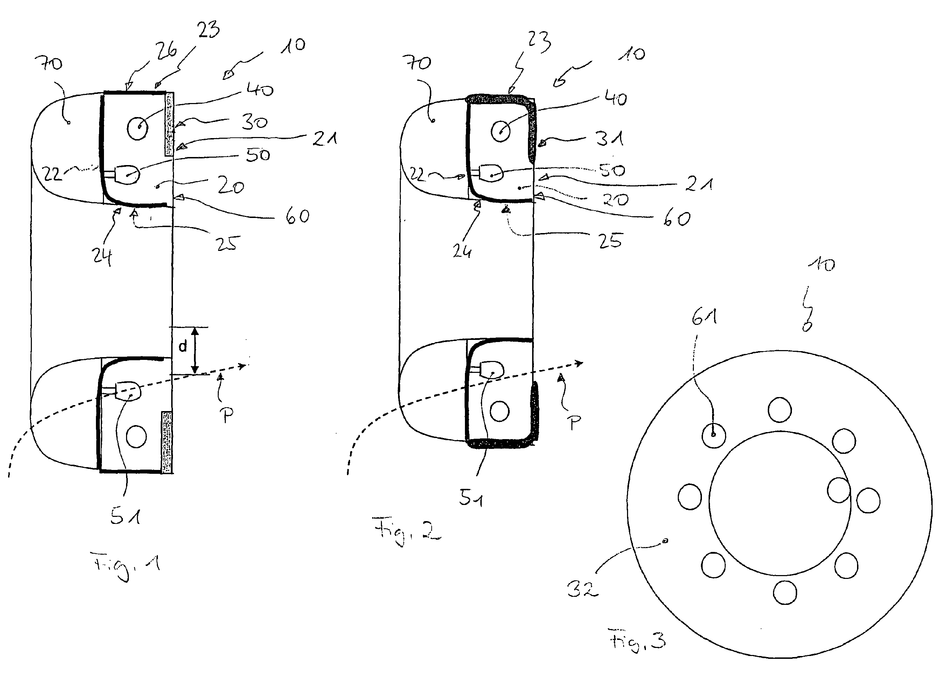

In Fig. 1 ist der prinzipielle Aufbau einer erfindungsgemäßen Beleuchtungsvorrichtung 10 in einer ersten Ausführungsform gezeigt. Die Beleuchtungsvorrichtung 10 ist für die Blitzlichtfotografie vorgesehen und ringförmig ausgebildet. Dargestellt ist eine vereinfachte Schnittdarstellung, d. h. der Ring ist aufgeschnitten, wobei jedoch die Schnittflächen nicht entsprechend durch schraffierte Bereiche gekennzeichnet sind.

Die ringförmige Beleuchtungsvorrichtung 10 ist eine Blitz erzeugende Vorrichtung (Ringflash) und weist einen ebenfalls ringförmigen Reflektorraum 20 auf, der derart an dem Ringflash angeordnet ist, dass er in Richtung eines aufzunehmenden Objektes ausgerichtet werden kann.

In dem Reflektorraum 20 ist ein Blitzelement 40, in diesem Falle ein ringförmiges Blitzrohr als erste Lichtquelle angeordnet. Dieses ist entweder ortsfest oder variabel einstellbar montiert bzw. montierbar. Ferner sind Punktlichtquellen 50, 51 vorgesehen, die als Einstelllicht dienen. Hier sind zwei Punktlichtquellen 50, 51 sichtbar, wobei auch lediglich eine Lichtquelle angeordnet sein könnte. Wünschenswert ist eine Vielzahl von Punktlichtquellen, die dann gleichmäßig über den Umfang verteilt angeordnet sind, um eine gleichmäßige Lichtausbeute zu erhalten. Das Einstelllicht dient z. B. als Dauerlichtquelle.

Der Reflektorraum 20 ist in diesem Ausführungsbeispiel mit einem Hauptreflektor 25 und einem Seitenreflektor 26 ausgekleidet. Ferner ist ein Filterelement 30 vorgesehen, das den Reflektorraum 20 in Richtung eines aufzunehmenden Objektes (im Gebrauch der Beleuchtungsvorrichtung), d. h., an einer sich radial erstreckenden Außenfläche, teilweise abdeckt. Der Hauptreflektor 25 ist als L-förmiges Profil ausgebildet und erstreckt sich mit dem einen Schenkel über die sich axial erstreckende innere Seitenwand 24 und mit dem anderen Schenkel über die sich radial erstreckende Rückwand 22 des Raumes 20, wobei die Wand 22 der durch das Filterelement 30 abgedeckten, sich radial erstreckenden Außenfläche 21 gegenüberliegt. Der Seitenreflektor 26 ist an der sich axial erstreckenden äußeren Seitenwand 23 der Beleuchtungsvorrichtung 10 angeordnet. Die Reflektoren 25, 26 sorgen für eine Erhöhung der Lichtausbeute. Zudem lassen sich Blendungen in unerwünschten Bereichen vermeiden. Möglich ist es auch, dass die Reflektoren die entsprechenden Wände selbst ausbilden. Das heißt also, dass die entsprechenden Wände durch die Reflektoren gebildet werden oder aber die Wände sind mit einer Reflektorschicht versehen.

Die Beleuchtungsvorrichtung wird während des Betriebes so angeordnet, dass der Reflektorraum dem abzulichtenden Objekt zugewandt ist. Die Seitenwände (Mantelflächen bzw. Mantelfläche und innen liegende, sich parallel zur Mantelfläche erstreckende Fläche des Hohlzylinders) werden als axiale Wände bzw. als sich axial erstreckende Wände verstanden, die in Ringebene liegenden Wände (bzw. Flächen; Bodenfläche, Deckfläche des Hohlzylinders) als radiale Wände bzw. als sich radial erstreckende Wände (bzw. Flächen). Die Flächen sind demgemäß im Wesentlichen im 90°-Winkel zueinander angeordnet.

Das Filterelement 30 ist derart ausgebildet, dass es den Reflektorraum 20 an der sich radial erstreckenden Außenfläche 21 des Reflektorraumes nur teilweise abdeckt und nach radial innen begrenzt ist. Damit wird eine Lüftungsöffnung 60 für die Beleuchtungsvorrichtung 10 bereitgestellt, die als Öffnungsring ausgebildet ist.

Da während der Erzeugung von Blitzen Wärme entsteht, lässt sich diese über die Lüftungsöffnung 60 in Pfeilrichtung P abführen. Die Punktlichtquellen 50, 51 des Einstelllichts sind vor der Lüftungsöffnung 60 angeordnet und werden so nicht von dem Filterelement 30 abgedeckt. Im Übrigen ist die Öffnung so definiert, dass minimale Sicherheitsmaße d eingehalten werden.

Aufgrund der Lüftungsöffnung ist es möglich, eine hohe Anzahl an Blitzen in einer Serie zu erzeugen, da die produzierte Wärme einfach ableitbar ist und die Lichtquellen so auch kühlbar sind. Vorzugsweise kann eine Zwangsbelüftung, z. B. ein Gebläse, vorgesehen werden (hier nicht gezeigt), das die erzeugte Wärme in Pfeilrichtung P aus dem Reflektorraum 20 schiebt.

Das Filterelement 30 ist hier als UV-Schutzglas vorgesehen und erlaubt einen optimalen Schutz des aufzunehmenden Objekts vor UV-Strahlung.

Unmittelbar an die sich radial erstreckende Rückwand 22 des Reflektorraumes 20 anschließend ist ein Elektronikraum 70 angeordnet, der zur Aufnahme einer Steuerschaltung für die Beleuchtungsvorrichtung 10 vorgesehen ist. Das Gebläse zieht die Luft dann z. B. vom hinteren Elektronikraum 70 und schiebt sie in den Reflektorraum 20. Die Lüftungsöffnung 60 erlaubt die Entfernung der erwärmten Luft.

Fig. 2 zeigt eine weitere Ausführungsform der erfindungsgemäßen Vorrichtung 10. Auch hier ist ein vereinfacht dargestellter Schnitt gezeigt. Diese Ausführungsform entspricht im Wesentlichen der in Fig. 1 gezeigten, allerdings ist hier das Filterelement 31 unterschiedlich ausgebildet. Das Filterelement 31 deckt den Reflektorraum 20 wie in Fig. 1 beschrieben teilweise ab, umschließt jedoch zusätzlich die sich axial erstreckende äußere Seitenwand 23 des Reflektorraumes 20, so dass der Reflektorraum 20 auch seitlich von UV-Schutzglas umgeben ist. Das Filterelement 31 bildet hier (im Prinzip mit zwei Schenkeln), ebenso wie der Hauptreflektor, ein L-Profil aus, wobei beide L-Profile derart zueinander angeordnet sind, dass sie den Reflektorraum 20 umschließen.

Auch in diesem Falle lässt sich erwärmte Luft in Pfeilrichtung P aus der Beleuchtungsvorrichtung 10 ableiten.

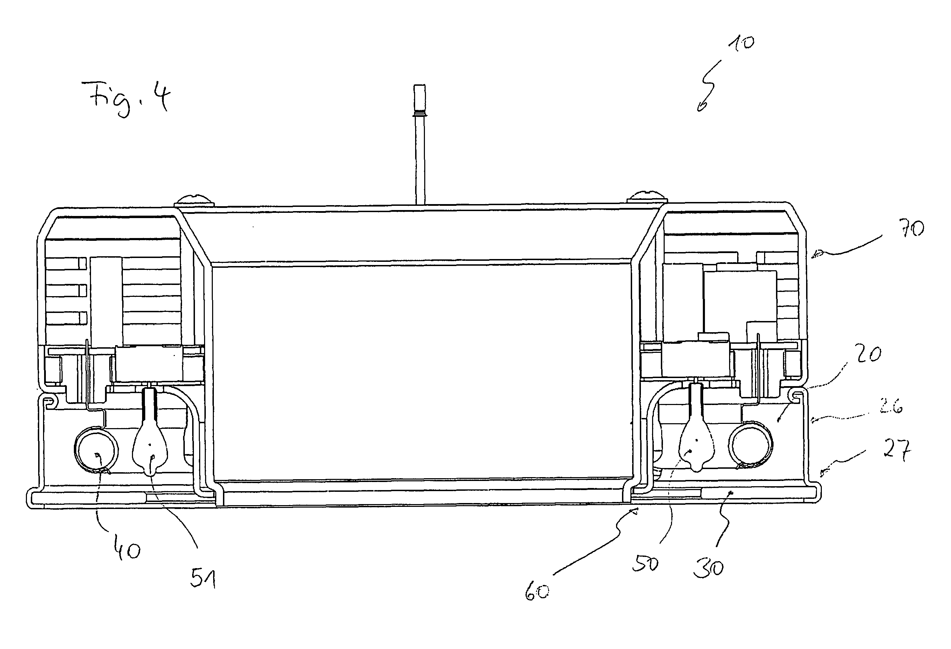

Die ringförmige Ausgestaltung der Beleuchtungsvorrichtung (Ringtlash) 10 ermöglicht es u. a., dass die Vorrichtung auf das Objektiv einer Kamera aufsetzbar oder sich um den Schirmstock eines Reflektorschirms herumerstreckend anordenbar ist. Bei der Ausführungsform gemäß Fig. 1 können Filterelement 30 und Seitenreflektor 26 z. B. einstückig ausgebildet sein (s. insbesondere Fig. 4) oder aber voneinander trennbar bzw. getrennt. In letzterem Fall ist der Seitenreflektor 26 dann, insbesondere in der Anwendung mit dem Reflektorschirm, vollständig entfernbar, so dass über den Reflektorschirm die Lichtausbeute erhöht werden kann.

Fig. 3 zeigt eine weitere Ausführungsform der erfindungsgemäßen Vorrichtung 10 in einer Ansicht in Richtung auf den Reflektorraum. Hier ist die als Öffnungsring ausgebildete Lüftungsöffnung 61 in dem Filterelement 32 durch eine Vielzahl an über den Umfang verteilte Öffnungen ersetzt. So sind die Punktlichtquellen geschützter untergebracht. Zudem wird ein Eingriff in den Reflektorraum im Wesentlichen verhindert. In dieser Ausführungsform sind die Lüftungsöffnungen 61 gleichmäßig über den Umfang verteilt. Möglich ist es natürlich auch, eine andere, nicht gleichmäßige Verteilung vorzugeben, um möglichst viele Lüftungsöffnungen dort vorzusehen, wo die größte Temperaturerhöhung in dem Reflektorraum zu erwarten ist. Die Lüftungsöffnungen können ebenso unterschiedliche Größen und/oder Formen aufweisen.

Fig. 4 zeigt eine weitere Ausführungsform der erfindungsgemäßen Vorrichtung 10 in aufgeschnittener Darstellung. Diese entspricht im Wesentlichen der in Fig. 1 gezeigten, allerdings sind hier Seitenreflektor 26 und Schutzglas 30 fest miteinander verbunden, so dass sie eine nur im Gesamten austauschbare Einheit bilden. In dieser Ausführungsform ist das Schutzglas 30 im Seitenreflektor 26 durch Bördeln befestigt, so dass eine nicht demontierbare Baugruppe vorgesehen ist. Das heißt, der Seitenreflektor 26 ist derart mit einem Randbereich 27 ausgebildet, dass das Schutzglas in diesen verformten Randbereich 27 aufnehmbar ist.

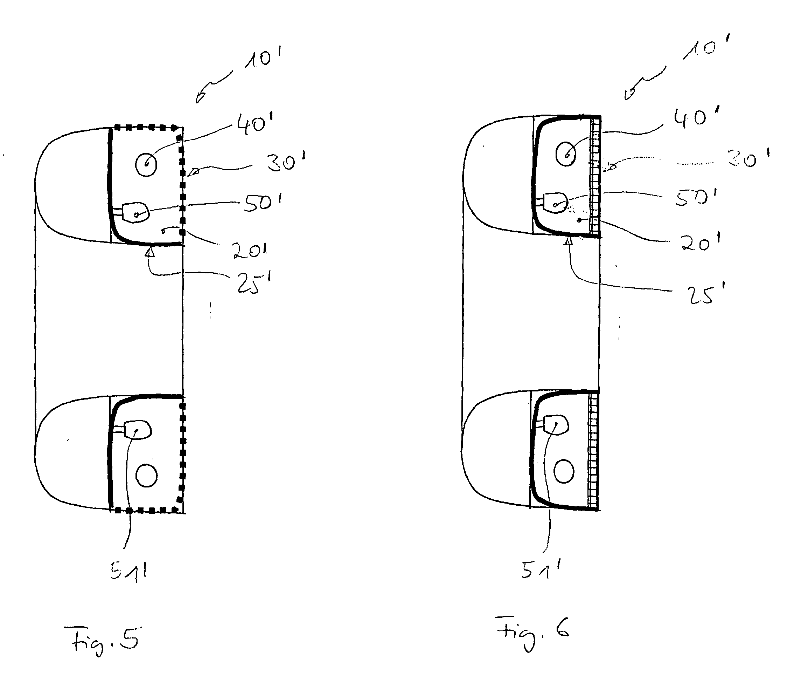

Die Fig. 5 und 6 zeigen herkömmliche Anordnungen 10', wie sie aus dem Stand der Technik z.B. der DE 10 2005 034436A1, bekannt sind. Auch diese Anordnungen sind ringförmig ausgebildet und weisen einen Reflektorraum 20' mit Blitzrohr 40' und Punktlichtquellen 50', 51' auf.

Die Anordnung 10' gemäß Fig. 5 zeigt zur Abdeckung des Reflektorraums 20' ein Schutzgitter 30', das als Eingriffsschutz dient, jedoch keine UV-Strahlung abhält. Das Gitter 30' zieht sich über die sich axial erstreckende äußere Seitenwand des Reflektorraums 20' und ist daher, ebenso wie ein Hauptreflektor 25' als ringförmiges L-Profil ausgebildet. Gitter und Hauptreflektor umschließen den Reflektorraum 20' vollständig.

Wie mit Fig. 6 gezeigt, ist der Reflektorraum 20' hier sowohl an der sich radial erstreckenden Rückwand als auch an den seitlichen Wänden mit einer Beschichtung aus reflektierendem Material ausgekleidet, während die der sich radial erstreckenden Rückwand gegenüberliegende sich radial erstreckende Außenfläche mit dem Gitter 30' abgedeckt ist. Auch hier ist ein UV-Schutz nicht ausreichend gegeben.

Um den UV-Schutz auch bei herkömmlichen Anordnungen zu realisieren, sind die Reflektorraumabdeckungen meist als Schutzglas ausgebildet. Bekannt sind bisher nur vollständig abdeckende Filterelemente, die keine Abfuhr von Wärme zulassen. Auch können bei diesen Anordnungen keine Punktlichtquellen vorgesehen werden, da das Filterelement die Lichtausbeute beeinträchtigen würde.

Mit der erfindungsgemäßen Beleuchtungsvorrichtung ist es möglich, sowohl mit Einstelllicht zu arbeiten, als auch einen ausreichenden UV-Schutz vorzusehen. Die Lüftungsöffnung(en) ermöglichen es, unter Ausnutzung beider Vorteile (Anwendung von Einstelllicht, ausreichender UV-Schutz) eine Vorrichtung bereitzustellen, die in allen Anwendungsbereichen zur Erlangung hoher Bildqualität einsetzbar ist. Die Anzahl der produzierbaren Blitze in einer Blitzserie kann erhöht werden und das Objekt lässt sich näher an die Leuchte heranbringen als bei herkömmlichen Anordnungen.

### Bezugszeichenliste

- 10: Beleuchtungsvorrichtung
- 20: Reflektorraum
- 21: Sich radial erstreckende Außenfläche
- 22: Sich radial erstreckende Rückwand
- 23: Sich axial erstreckende äußere Seitenwand
- 24: Sich axial erstreckende innere Seitenwand
- 25: Hauptreflektor
- 26: Seitenreflektor
- 27: Randbereich
- 30: Filterelement
- 31: Filterelement
- 32: Filterelement
- 40: Blitzelement, Blitzrohr
- 50: Punktlichtquelle, Einstelllicht
- 51: Punktlichtquelle, Einstelllicht
- 60: Lüftungsöffnung
- 61: Lüftungsöffnung
- 70: Elektronikraum

- 10': Beleuchtungsvorrichtung
- 20': Reflektorraum
- 25': Hauptreflektor
- 30': Schutzgitter
- 40': Blitzelement, Blitzrohr
- 50': Punktlichtquelle, Einstelllicht
- 51': Punktlichtquelle, Einstelllicht

- P: Pfeilrichtung (Luftstrom)
- d: Sicherheitsabstand

## Patentansprüche

1. Beleuchtungsvorrichtung (10) für die Blitzlichtfotografie, umfassend
- mindestens einen im Gebrauch in Richtung eines aufzunehmenden Objektes anordenbaren Reflektorraum (20) mit mindestens einem Reflektor (25),
- mindestens ein in dem Reflektorraum (20) angeordnetes Blitzelement (40) als erste Lichtquelle,
- mindestens ein, den Reflektorraum (20) im Gebrauch in Richtung des aufzunehmenden Objektes auf einer sich radial erstreckenden Außenfläche (21) abdeckendes UV-Filterelement (30, 31, 32), **dadurch gekennzeichnet, dass** das Filterelement (30, 31, 32) wenigstens eine Lüftungsöffnung (60, 61) aufweist.

2. Beleuchtungsvorrichtung nach Anspruch 1,
**dadurch gekennzeichnet, dass**
der Reflektorraum (20) ringförmig ausgebildet und das Blitzelement (40) über den Umfang verteilt angeordnet ist.

3. Beleuchtungsvorrichtung nach Anspruch 1 oder 2,
**dadurch gekennzeichnet, dass**
das Blitzelement (20) mindestens ein ringförmiges Blitzrohr umfasst, welches im ringförmigen Reflektorraum (20) entweder ortsfest oder variabel einstellbar montiert oder montierbar ist.

4. Beleuchtungsvorrichtung nach einem der vorhergehenden Ansprüche,
**dadurch gekennzeichnet, dass**
im Reflektorraum (20) mindestens eine, insbesondere mindestens drei gleichmäßig über den Umfang verteilt angeordnete Punktlichtquelle(n) (50, 51) als zweite Lichtquelle vorgesehen ist bzw. sind, wobei die Punktlichtquelle(n) (50, 51) als Einstelllicht dient bzw. dienen.

5. Beleuchtungsvorrichtung nach Anspruch 4,
**dadurch gekennzeichnet, dass**
jede der Punktlichtquellen (50, 51) vor jeweils einer Lüftungsöffnung (60, 61) angeordnet ist.

6. Beleuchtungsvorrichtung nach einem der vorhergehenden Ansprüche,
**dadurch gekennzeichnet, dass**
ein Lüfter, insbesondere Gebläse vorgesehen ist, mittels dem der Reflektorraum (20) zwangslüftbar ist, wobei die durch den Lüfter in den Reflektorraum (20) geblasene Luft durch die im Filterelement (30, 31, 32) vorgesehene Lüftungsöffnung (60, 61) nach außen entweichen kann.

7. Beleuchtungsvorrichtung nach einem der vorhergehenden Ansprüche,
**dadurch gekennzeichnet, dass**
der Reflektorraum (20) einen Hauptreflektor (25) und einen Seitenreflektor (26) umfasst, wobei der Seitenreflektor (26) eine sich axial erstreckende äußere Seitenwand (23) des Reflektorraumes (20) begrenzt.

8. Beleuchtungsvorrichtung nach Anspruch 7,
**dadurch gekennzeichnet, dass**
der Seitenreflektor (26) und das Filterelement (30, 32) einstückig ausgebildet sind.

9. Beleuchtungsvorrichtung nach Anspruch 7 oder 8,
**dadurch gekennzeichnet, dass**
das UV-Filterelement (30, 32) vom Seitenreflektor (26) trennbar ist.

10. Beleuchtungsvorrichtung nach einem der vorhergehenden Ansprüche,
**dadurch gekennzeichnet, dass**
das UV-Filterelement (30, 31, 32) als UV-Schutzglas ausgebildet ist.

11. Beleuchtungsvorrichtung nach einem der vorhergehenden Ansprüche,
**dadurch gekennzeichnet, dass**
dem Reflektorraum (20) ein Elektronikraum (70) zugeordnet ist, der zur Aufnahme einer Steuerschaltung für die Beleuchtungsvorrichtung (10) dient.

12. Beleuchtungsvorrichtung nach einem der vorhergehenden Ansprüche,
**dadurch gekennzeichnet, dass**
die im UV-Filterelement (30, 31) vorgesehene Lüftungsöffnung (60) als durchgehender Öffnungsring ausgebildet ist, welcher vorzugsweise das Filterelement (30, 31) nach radial innen begrenzt.

13. Beleuchtungsvorrichtung nach einem der vorhergehenden Ansprüche,
**dadurch gekennzeichnet, dass**
die im UV-Filterelement (32) vorgesehene Lüftungsöffnung durch eine Vielzahl vorzugsweise gleichmäßig über den Umfang verteilt angeordneter Einzelöffnungen (61) definiert ist.

14. Beleuchtungsvorrichtung nach einem der Ansprüche 7, 8 oder 9,
**dadurch gekennzeichnet, dass**
der Hauptreflektor (25) durch die mit einer reflektierenden Schicht versehene Innenseite eines ringförmigen L-Profils gebildet ist.

15. Beleuchtungsvorrichtung nach einem der Ansprüche 7, 8, 9 oder 14,
**dadurch gekennzeichnet, dass**
das UV-Filterelement (31, 32) ein ringförmiges L-Profil aus UV-Schutzglas umfasst, welches derart am Hauptreflektor (25) angeordnet ist, dass die Innenseiten von Hauptreflektor (25) und Filterelement (31, 32) einander zugewandt sind.

16. Beleuchtungsvorrichtung nach einem der Ansprüche 7, 8, 9, 14 oder 15 in Verbindung mit Anspruch 11,
**dadurch gekennzeichnet, dass**
der Elektronikraum (70) an der Rückseite des sich radial nach außen erstreckenden Schenkels des ringförmigen L-Profils des Hauptreflektors (25) angeordnet ist, insbesondere innerhalb eines sich ringförmig erstreckenden Elektronikgehäuses.

17. Beleuchtungsvorrichtung nach einem der vorhergehenden Ansprüche,
**dadurch gekennzeichnet, dass**
bei Ausbildung des UV-Filterelements (31, 32) als ringförmiges L-Profil aus UV-Schutzglas der sich axial oder alternativ auch radial erstreckende Schenkel durch ein(e) lichtundurchlässige(s) Band oder Ringscheibe abdeckbar ist.

18. Verwendung einer Beleuchtungsvorrichtung nach einem der vorhergehenden Ansprüche für eine Kamera oder eine Reflektorschirm, wobei in erstgenanntem Fall die Beleuchtungsvorrichtung (10) sich vorzugsweise um ein Objektiv und in zweitgenanntem Fall sich um einen Schirmstock herumerstreckend anordenbar ist.

## Claims

1. Illumination device (10) for flashlight photography, comprising
- at least one reflector chamber (20) which, in use, can be arranged in the direction of an object being photographed, having at least one reflector (25),
- at least one flash element (40) arranged in the reflector chamber (20) as first light source,
- at least one UV filter element (30, 31, 32) which, in use, covers the reflector chamber (20) on a radially extending outer face (21) in the direction of the object being photographed,
**characterized in that**
the filter element (30, 31, 32) has at least one ventilation opening (60, 61).

2. Illumination device according to claim 1,
**characterized in that**
the reflector chamber (20) is of ring-shaped construction and the flash element (40) is arranged distributed around the circumference.

3. Illumination device according to claim 1 or 2,
**characterized in that**
the flash element (20) comprises at least one ring-shaped flash tube which is mounted or mountable in the ring-shaped reflector chamber (20) either in fixed position or so as to be variably adjustable.

4. Illumination device according to any one of the preceding claims,
**characterized in that**
in the reflector chamber (20) there is(are) provided as second light source at least one, especially at least three, point light source(s) (50, 51) arranged uniformly distributed around the circumference, the point light source(s) (50, 51) serving as modelling light.

5. Illumination device according to claim 4,
**characterized in that**
each of the point light sources (50, 51) is arranged in front of a respective ventilation opening (60, 61).

6. Illumination device according to any one of the preceding claims,
**characterized in that**
a ventilation means, especially a fan, is provided by means of which the reflector chamber (20) can be subjected to forced ventilation, the air blown into the reflector chamber (20) by the ventilation means being able to escape to the outside through the ventilation opening (60, 61) provided in the filter element (30, 31, 32).

7. Illumination device according to any one of the preceding claims,
**characterized in that**
the reflector chamber (20) comprises a main reflector (25) and a lateral reflector (26), the lateral reflector (26) defining an axially extending outer side wall (23) of the reflector chamber (20).

8. Illumination device according to claim 7,
**characterized in that**
the lateral reflector (26) and the filter element (30, 32) are of one-piece construction.

9. Illumination device according to claim 7 or 8,
**characterized in that**
the UV filter element (30, 32) is separable from the lateral reflector (26).

10. Illumination device according to any one of the preceding claims,
**characterized in that**
the UV filter element (30, 31, 32) is in the form of UV protective glass.

11. Illumination device according to any one of the preceding claims,
**characterized in that**
there is associated with the reflector chamber (20) an electronics chamber (70) which serves to receive a control circuit for the illumination device (10).

12. Illumination device according to any one of the preceding claims,
**characterized in that**
the ventilation opening (60) provided in the UV filter element (30, 31) is in the form of a continuous annular opening which preferably bounds the filter element (30, 31) radially inwardly.

13. Illumination device according to any one of the preceding claims,
**characterized in that**
the ventilation opening provided in the UV filter element (32) is defined by a plurality of individual openings (61) preferably arranged uniformly distributed around the circumference.

14. Illumination device according to any one of claims 7, 8 and 9,
**characterized in that**
the main reflector (25) is formed by the inner side of a ring-shaped L-profile, which inner side is provided with a reflecting layer.

15. Illumination device according to any one of claims 7, 8, 9 and 14,
**characterized in that**
the UV filter element (31, 32) comprises a ring-shaped L-profile made of UV protective glass which is arranged on the main reflector (25) in such a way that the inner sides of the main reflector (25) and the filter element (31, 32) face one another.

16. Illumination device according to any one of claims 7, 8, 9, 14 and 15 in conjuncttion with claim 11,
**characterized in that**
the electronics chamber (70) is arranged on the rear side of the radially outwardly extending limb of the ring-shaped L-profile of the main reflector (25), especially inside an electronics housing extending in the shape of a ring.

17. Illumination device according to any one of the preceding claims,
**characterized in that**
when the UV filter element (31, 32) is in the form of a ring-shaped L-profile made of UV protective glass, the axially or alternatively also radially extending limb can be covered by a light-impermeable strip or annular disc.

18. Use of an illumination device according to any one of the preceding claims for a camera or an umbrella reflector, wherein the illumination device (10) in the former case is preferably a lens and in the latter case can be arranged extending around an umbrella shaft.

## Revendications

1. Dispositif d'éclairage (10) pour photographie au flash, comprenant :
- au moins un espace réflecteur (20) qui en service est agençable en direction d'un objet à photographier, avec au moins un réflecteur (25),
- au moins un élément de flash (40) agencé dans l'espace réflecteur (20) comme première source de lumière,
- au moins un élément de filtre UV (30, 31, 32) recouvrant l'espace réflecteur (20) en service en direction de l'objet à photographier sur une surface externe (21) s'étendant radialement,
**caractérisé en ce que** l'élément de filtre (30, 31, 32) présente au moins une ouverture d'aération (60, 61).

2. Dispositif d'éclairage selon la revendication 1,
**caractérisé en ce que**
l'espace réflecteur (20) se présente sous la forme d'un anneau et l'élément de flash (40) est réparti sur la périphérie.

3. Dispositif d'éclairage selon la revendication 1 ou 2,
**caractérisé en ce que**
l'élément de flash (20) comprend au moins un tube de flash annulaire qui est ou peut être monté avec un réglage fixe ou variable dans l'espace réflecteur (20) annulaire.

4. Dispositif d'éclairage selon l'une quelconque des revendications précédentes,
**caractérisé en ce que**,
dans l'espace réflecteur (20), il est prévu au moins une, en particulier au moins trois source(s) de lumière ponctuelle(s) (50, 51) distribuées de manière régulière sur la périphérie en tant que seconde source de lumière, dans lequel la ou les source(s) de lumière ponctuelle(s) (50, 51) fait ou font office de lumière de réglage.

5. Dispositif d'éclairage selon la revendication 4,
**caractérisé en ce que**
chacune des sources de lumière ponctuelles (50, 51) est respectivement agencée devant une ouverture d'aération (60, 61).

6. Dispositif d'éclairage selon l'une quelconque des revendications précédentes,
**caractérisé en ce que**
l'on prévoit un aérateur, en particulier une soufflante, au moyen duquel l'espace réflecteur (20) peut être aéré de manière forcée, dans lequel l'air soufflé par l'aérateur, dans l'espace réflecteur (20) peut s'échapper vers l'extérieur par l'ouverture d'aération (60, 61) prévue dans l'élément de filtre (30, 31, 32).

7. Dispositif d'éclairage selon l'une quelconque des revendications précédentes,
**caractérisé en ce que**
l'espace réflecteur (20) comprend un réflecteur principal (25) et un réflecteur latéral (26), dans lequel le réflecteur latéral (26) délimite une paroi latérale (23) externe de l'espace réflecteur (20) s'étendant axialement.

8. Dispositif d'éclairage selon la revendication 7,
**caractérisé en ce que**
le réflecteur latéral (26) et l'élément de filtre (30, 32) sont formés d'un seul tenant.

9. Dispositif d'éclairage selon la revendication 7 ou 8,
**caractérisé en ce que**
l'élément de filtre UV (30, 32) est séparable du réflecteur latéral (26).

10. Dispositif d'éclairage selon l'une quelconque des revendications précédentes,
**caractérisé en ce que**
l'élément de filtre UV (30, 31, 32) se présente sous la forme d'un verre de protection contre les rayons UV.

11. Dispositif d'éclairage selon l'une quelconque des revendications précédentes,
**caractérisé en ce que**
un espace d'électronique (70) est affecté à l'espace réflecteur (20), lequel espace d'électronique sert à loger un circuit de commande pour le dispositif d'éclairage (10).

12. Dispositif d'éclairage selon l'une quelconque des revendications précédentes,
**caractérisé en ce que**
l'ouverture d'aération (60) prévue dans l'élément de filtre UV (30, 31) se présente sous la forme d'un anneau d'ouverture continu qui de préférence délimite l'élément de filtre (30, 31) radialement vers l'intérieur.

13. Dispositif d'éclairage selon l'une quelconque des revendications précédentes,
**caractérisé en ce que**
l'ouverture d'aération prévue dans l'élément de filtre UV (32) est définie par une pluralité d'ouvertures individuelles (61) distribuées de préférence de manière régulière sur la périphérie.

14. Dispositif d'éclairage selon l'une quelconque des revendications 7, 8 ou 9,
**caractérisé en ce que**
le réflecteur principal (25) est formé par le côté interne, pourvu d'une couche réfléchissante, d'un profilé en L de forme annulaire.

15. Dispositif d'éclairage selon l'une quelconque des revendications 7, 8, 9 ou 14,
**caractérisé en ce que**
l'élément de filtre UV (31, 32) comprend un profilé en L de forme annulaire fabriqué dans un verre de protection contre les rayons UV qui est agencé contre le réflecteur principal (25) de sorte que les côtés internes du réflecteur principal (25) et de l'élément de filtre (31, 32) sont tournés l'un vers l'autre.

16. Dispositif d'éclairage selon l'une quelconque des revendications 7, 8, 9, 14 ou 15 en relation avec la revendication 11,
**caractérisé en ce que**
l'espace d'électronique (70) est agencé au dos de la branche s'étendant radialement vers l'extérieur du profilé en L de forme annulaire du réflecteur principal (25), en particulier à l'intérieur d'un boîtier d'électronique s'étendant en forme d'anneau.

17. Dispositif d'éclairage selon l'une quelconque des revendications précédentes,
**caractérisé en ce que**,
dans la formation de l'élément de filtre UV (31, 32) en tant que profilé en L en forme d'anneau fabriqué dans un verre de protection contre les rayons UV, la branche s'étendant axialement, ou alternativement aussi radialement, peut être recouverte par une bande ou un disque annulaire opaque.

18. Utilisation d'un dispositif d'éclairage selon l'une quelconque des revendications précédentes pour un appareil photo ou un écran réflecteur, dans laquelle dans le premier cas cité le dispositif d'éclairage (10) est agençable de préférence autour d'un objectif, et dans le second cas cité autour d'un pied d'écran.
